# EUROPÄISCHE PATENTSCHRIFT

(11) **EP 3 072 777 B1**
(45) Veröffentlichungstag und Bekanntmachung des Hinweises auf die Patenterteilung: **03.01.2018**
(21) Anmeldenummer: 16162320.2
(22) Anmeldetag: 24.03.2016
(51) Int. Cl.: B62B 3/06, B62B 5/00, B66F 9/075, B66F 9/20

(54) **FLURFÖRDERZEUG, INSBESONDERE NIEDERHUBFAHRZEUG**
INDUSTRIAL TRUCK, IN PARTICULAR PALLET TRUCK
CHARIOT DE MANUTENTION, NOTAMMENT TRANSPALETTE

(30) Priorität: 27.03.2015 DE 102015104745
(43) Veröffentlichungstag der Anmeldung: 28.09.2016
(73) Patentinhaber: Jungheinrich Aktiengesellschaft, 22047 Hamburg (DE)
(72) Erfinder: Krumpek, Marcel, 04451 Borsdorf (DE); Hanusch, Stefan, 04229 Leipzig (DE); Hohmann, Michael, 04277 Leipzig (DE)
(74) Vertreter: Hauck Patentanwaltspartnerschaft mbB

(56) Entgegenhaltungen:
- EP-A1- 2 439 165
- EP-A1- 2 848 575
- EP-A2- 1 179 466
- US-A- 4 047 698

## Beschreibung

Die vorliegende Erfindung betrifft ein Flurförderzeug, insbesondere ein Niederhubfahrzeug. Das Flurförderzeug ist mit einer Lastgabel ausgestattet, die wenigstens zwischen einer Einfahrhöhe und einer Freihubhöhe über eine Hubeinrichtung verstellbar ist. Grundsätzlich kann auch im Hochhubbereich eine Hubeinrichtung ausgebildet sein, um eine Lastgabel zwischen einer Einfahrhöhe und einer Freihubhöhe zu bewegen.

Bei herkömmlichen Fahrzeugen erfolgt jegliche Hub- und Senkbewegung durch eine Betätigung eines oder mehrerer Tasten zum Heben/Senken, die beispielsweise am Deichselkopf des Niederhubwagens angeordnet sind. Die Position der Lastgabel ist dabei frei anfahrbar und in einem Bereich zwischen minimalem Hub und maximaler Hubhöhe frei einstellbar. Auch ist es bekannt, eine Hubhöhe über einen Bedienhebel anzufahren.

Aus EP 2 439 165 B1 ist ein Flurförderzeug mit einem höhenverstellbaren Lasttragmittel und einer Hubhöhensteuerung für das Lasttragmittel bekannt. In der Hubhöhensteuerung sind mehrere, vorbestimmte Hubhöhen für das Lasttragmittel abgelegt. Die Hubhöhensteuerung fährt eine der vorbestimmten Hubhöhen an, wenn über das Bedienelement die vorgegebene Geschwindigkeit zum Verstellen des Lasttragmittels unter einen vorbestimmten Schwellwert abgesunken ist. Die Hubhöhensteuerung wählt dabei als anzufahrende Hubhöhe diejenige Hubhöhe von den vorbestimmten Hubhöhen aus, die dem Istwert der Hubhöhe in Bewegungsrichtung des Lasttragmittels am nächsten kommt. Eine solche Hubhöhensteuerung erweist sich insbesondere beim Anfahren von schwer einsehbaren Hubhöhen in Hochregallagern als besonders vorteilhaft.

Aus US 4,047,698 ist ein Flurförderzeug mit einer Lastgabel bekannt, die zwischen einer Einfahrhöhe und einer Freihubhöhe über eine Hubeinrichtung verstellbar ist, mit einer einstellbaren Freihubhöhe und einem Bedienelement, bei dessen Betätigung die Hubeinrichtung die Lastgabel in die Einfahrhöhe verstellt, wobei die Lastgabel an einem höhenverstellbaren Lastrahmen angeordnet ist, der an einem Antriebsrahmen gelagert ist, und mindestens eine Schaltnocke zwischen Antriebs- und Lastrahmen angeordnet ist. Dieses Flurförderzeug ist mit einem Hebe- und einem Senk-Knopf ausgestattet. Eine Hilfsschaltung begrenzt eine Hub- und eine Absenkbewegung, wobei hierfür ein mit einem Schalter zusammenwirkender Nockenabschnitt vorgesehen ist.

Der Erfindung liegt die Aufgabe zugrunde, ein Flurförderzeug bereitzustellen, bei dem mit einfachen Mitteln die Umschlagleistung des Flurförderzeugs durch eine Reduzierung der Hub- und Senkzeiten und einer damit verbundenen Senkung des Energieverbrauchs bereitgestellt wird.

Erfindungsgemäß wird die Aufgabe durch ein Flurförderzeug mit den Merkmalen aus Anspruch 1 gelöst. Vorteilhafte Ausgestaltungen bilden den Gegenstand der Unteransprüche.

Das erfindungsgemäße Flurförderzeug, insbesondere ein Niederhubfahrzeug, besitzt eine Lastgabel, die zwischen einer Einfahrhöhe und einer Freihubhöhe über eine Hubeinrichtung verstellbar ist. Die Einfahrhöhe erlaubt es, die Lastgabel in eine Palette oder in ein anderes Lastmittel einzuführen, um dieses anzuheben. Die Freihubhöhe ist die Hubhöhe der Lastgabel, bei der die aufgenommene Palette oder das sonstige Lastmittel ausreichend Bodenfreiheit besitzt. Die Freihubhöhe ist dabei so bestimmt, dass die Last ohne Risiko einer Bodenberührung mit dem Flurförderzeug transportiert werden kann, zugleich die Last aber auch nicht zu hoch angehoben ist. Bei dem erfindungsgemäßen Flurförderzeug sind Einfahrhöhe und Freihubhöhe jeweils einstellbar und ein Bedienelement ist vorgesehen, bei dessen Betätigung die Hubeinrichtung die Lastgabel in die Freihubhöhe hebt oder in die Einfahrhöhe absenkt. Das Bedienelement ist im Gegensatz zu einem Bedienelement, das einen Hebe- oder Senkvorgang steuert, so ausgebildet, dass bei seiner bevorzugt kurzzeitigen Betätigung die Lastgabel angehoben wird, bis die Freihubhöhe erreicht ist oder die Lastgabel abgesenkt wird, bis die Einfahrhöhe erreicht wurde. Das Bedienelement besteht aus einer Heben- und einer separaten Senken-Taste, wobei durch eine einmalige Betätigung der Heben-Taste ein Hebevorgang bis zur Freihubhöhe und durch die einmalige Betätigung der Senken-Taste ein Senkvorgang bis zur Einfahrhöhe erfolgt, ohne dass die entsprechende Taste gedrückt gehalten werden muss, wie bei einem herkömmlichen Heben- und Senkenbetrieb. Sollte sich die Lastgabel nicht zwischen Freihubhöhe und Einfahrhöhe befinden, kann die nächstliegende Position angefahren werden. Sind Freihubhöhe oder Einfahrhöhe erreicht, stoppt die Hubeinrichtung die Bewegung. Anders als bei bekannten Hubeinrichtungen und deren Ansteuerung muss hier nicht der Fahrer mit Augenmaß versuchen, die entsprechenden Höhen entweder zum Aufnehmen der Last oder zum Transportieren der Last anzusteuern. Hierdurch wird eine unnötig große Bewegung der Lastgabel zwischen diesen beiden Positionen vermieden und damit die Hub- und Senkzeiten verkürzt sowie Energie hierfür eingespart.

Erfindungsgemäß ist die Lastgabel an einem Lastrahmen angeordnet, der an einem Antriebsrahmen höhenverstellbar angeordnet ist, wobei ein Sensor die Relativbewegung zwischen diesen überwacht. Die Verwendung eines Sensors, der bei der Überwachung der Relativbewegung auf eine bestimmte Position oder Marke anspricht, kann besonders einfach realisiert und gegebenenfalls auch nachgerüstet werden. Erfindungsgemäß ist mindestens eine Schaltnocke zwischen Antriebs- und Lastrahmen angeordnet, bei deren Sensierung im Hubvorgang ein Signal zur Beendigung generiert wird. Hierbei kann der Nachlauf der Pumpe oder über Zeitsteuerung eine Einstellung der Hubhöhe, insbesondere der Freihubhöhe, generiert werden. Durch unterschiedliche Zeitsteuerungen können auch mehrere Hubhöhen umgesetzt werden, um beispielsweise verschiedene Freihubhöhen zu generieren. Erfindungsgemäß wird bei dem umgekehrten Vorgang, also dem Senkvorgang, bei Sensierung des Nichtvorhandenseins der Schaltnocke, ein zweites Signal für die Beendigung des Senkvorgangs generiert. Hierdurch wird die optimale Einfahrthöhe generiert, wobei über den Nachlauf der Pumpe oder über eine Zeitsteuerung eine weitere Einstellung umgesetzt werden kann.

Zeigt der Sensor die Anwesenheit der Schaltnocke, so ist eine Heben-Funktion in gewohnter Art und Weise verfügbar, bei der zum Heben die Heben-Taste gedrückt sein muss. Zeigt der Sensor die Abwesenheit der Schaltnocke, so ist eine Senken-Funktion in gewohnter Art und Weise verfügbar, bei der zum Senken die Senken-Taste gedrückt gehalten werden muss.

Die Ausgestaltung kann im Hinblick auf An- und Abwesenheit der Schaltnocke oder im Hinblick auf Heben und Senken auch umgekehrt dargestellt werden.

Bei der Erfindung erfolgt im Gegensatz zum Stand der Technik nach US 4,047,698 die Betätigung der Hubeinrichtung durch einen einzigen kurzen Bedienvorgang und nicht durch ein Dazu- oder Wegschalten eines zweiten Schalters. Hierdurch wird die Betätigung und das Anfahren der Höhen deutlich erleichtert.

Bevorzugt ist ein Wahlschalter vorgesehen, mit dem das erfindungsgemäße Anfahren von Freihubhöhe und Einfahrhöhe zu- und weggeschaltet werden kann. Ist das Anfahren weggeschaltet, so arbeiten Hub- und Senktaste des Bedienelements in herkömmlicher Art und Weise, ansprechend auf eine anhaltende Betätigung.

In einer bevorzugten Ausgestaltung steuert das Bedienelement mit Hub- und Senktaste bei einer Betätigung die Hubeinrichtung für eine Bewegung zwischen Freihubhöhe und Einfahrhöhe an. Über das Bedienelement kann die Lastgabel zwischen der Freihubhöhe und der Einfahrhöhe automatisch verfahren werden.

In einer bevorzugten Ausgestaltung ist das Bedienelement mit Hub- und Senktaste ausgebildet, um durch ein einmaliges Berühren oder Drücken betätigt zu werden. Im Gegensatz zu Bedienelementen, mit denen eine Höhe angesteuert werden kann, erfolgt mit dem erfindungsgemäßen Flurförderzeug eine zeitlich punktuelle Betätigung, um die Lastgabel entweder in die Freihubhöhe oder in die Einfahrhöhe zu stellen.

Die mindestens eine Schaltnocke wird in der gewünschten Höhe zur Sensierung durch den Sensor entweder am Antriebsrahmen oder am Lastrahmen montiert. Bevorzugt wird genau eine Schaltnocke zum Anfahren von Einfahrhöhe und Freihubhöhe verwendet.

In einer bevorzugten Ausgestaltung können unterschiedliche Paletten sowohl über Pumpennachlauf, Zeitsteuerung sowie Verstellung der Elemente Schaltnocke oder Sensor realisiert werden.

Mittels Pumpennachlauf und Zeitsteuerung mit vorbestimmten Parametern können verschiedene Palettentypen und Ladehilfsmittel umgesetzt und durch entsprechende Ausgabemittel durch das Bedienpersonal angewendet werden.

In einer bevorzugten Ausgestaltung ist es ebenfalls möglich, dass eine automatische Erkennung des Palettentyps erfolgt, so dass automatisch die entsprechende Freihub- und Einfahrhöhe eingestellt werden kann.

Eine bevorzugte Ausgestaltung der Erfindung wird nachfolgend an einem Beispiel näher erläutert. Es zeigen:
- Fig. 1: ein Niederhubfahrzeug mit einer Standplattform sowie eine zu transportierende Last in der Ansicht von der Seite und
- Fig. 2: eine schematische Ansicht zur Sensierung einer Schaltnocke.

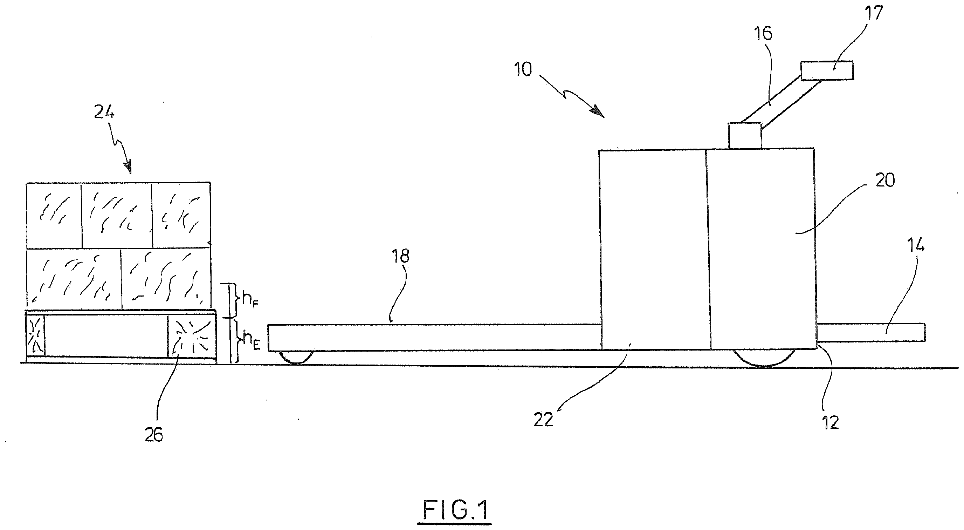

Fig. 1 zeigt ein erfindungsgemäßes Niederhubfahrzeug 10 mit einem Antriebsteil 12, der eine Standplattform 14 besitzt. Gesteuert wird das Fahrzeug über eine Kurzdeichsel 16, an deren Deichselkopf 17 Bedienelemente für eine in der Standplattform 14 stehende Bedienperson vorgesehen sind. Die Erfindung kann auch bei Fahrzeugen ohne Standplattform, beispielsweise bei Mitgängerfahrzeugen, oder bei Fahrzeugen mit Sitz verwendet werden.

Das Lastteil des Fahrzeugs besitzt eine Lastgabel 18, von der nur eine Zinke in der Seitenansicht erkennbar ist. Die Lastgabel 18 ist an einem Antriebsrahmen 20 angeordnet, der an einem fahrzeugfesten Lastrahmen 22 höhenverstellbar ist.

Für die Betätigung des dargestellten Fahrzeugs im Niederhub ist eine Einfahrhöhe h_{E} und eine Freihubhöhe h_{F} vorgesehen. Beide Höhen geben einen Abstand der Oberseite der Lastgabel vom Untergrund an, wenn das Fahrzeug auf ebenem Grund steht. Die Differenz von Freihubhöhe und Einfahrhöhe gibt die Hubstrecke an, um die die Lastgabel 18 angehoben werden muss. Eine Last 24 ruht auf einer Palette 26, die eine definierte Einfahrhöhe oder einen Bereich von Einfahrhöhen für die Lastgabel 18 besitzt. Die Freihubhöhe ist hierbei so gewählt, dass je nach Bauart des Flurförderzeugs und Typ der Palette ein Aufsetzen beim Transport vermieden wird.

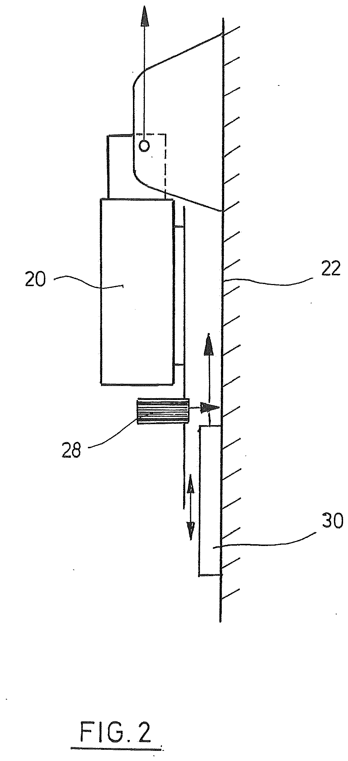

Fig. 2 zeigt eine besonders bevorzugte Ausgestaltung für die Erfindung. Demnach ist ein mit dem höhenverstellbaren Lastrahmen 20 verbundener Sensor 28 vorgesehen. Fahrzeugseitig ist an einem Lastrahmen 22 eine Schaltnocke 30 vorgesehen. Bei der Höhenverstellung des Antriebsrahmens über die Hubeinrichtung sensiert der Sensor 28 die Schaltnocke und löst entsprechend ein Signal aus. Damit das auslösende Signal in der richtigen Höhe auslöst, kann die Schaltnocke 30 beispielsweise über ein Langloch in der Höhe anpassbar montiert sein. So kann die gewünschte Höhe eingestellt werden. Weitere Möglichkeiten bietet der Pumpennachlauf sowie eine Zeiteinstellung oder auch die Höhenverstellbarkeit des Sensors. Eine zweite gewünschte Hubhöhe kann durch die Einstellung einer Zeitverzögerung festgelegt werden. Wird beispielsweise definiert, dass das Auftreten der Schaltnocke bei einer Hubbewegung einen sofortigen Stopp der Hubbewegung auslöst, so wird durch die Position der Schaltnocke der Kontakt der Gabeln mit dem Ladehilfsmittel definiert. Durch die zeitliche Verzögerung kann die gewünschte Hubhöhe / Freihubhöhe generiert werden. Beim Absenken wird bei Signalveränderung (Schaltnocke - keine Schaltnocke) der Stopp eingeleitet - mittels Pumpennachlauf oder Zeitsteuerung ist dies die optimale Ein und Ausfahrthöhe.

Die Betätigung der Lastgabel 18 erfolgt über ein herkömmliches Bedienelement, bei dem durch Drücken eine Hebe- oder Senkfunktion die Lastgabel in der Höhe verstellt wird. Durch eine einmalige, kurzzeitige Betätigung des Bedienelements wird die Lastgabel von der Freihubhöhe in die Einfahrhöhe verfahren. Durch ein erneutes, einmaliges Betätigen erfolgt die Bewegung in der umgekehrten Richtung aus der Einfahrhöhe in die Freihubhöhe. Alternativ ist es auch möglich, mehrere Tastenkombinationen vorzusehen, um die Freihubhöhe oder die Einfahrhöhe anzufahren.

Zeigt der Sensor die Anwesenheit der Schaltnocke, so ist Heben nur in gewohnter Art und Weise verfügbar. Zeigt der Sensor die Abwesenheit der Schaltnocke, so ist Senken nur in der gewohnten Art und Weise verfügbar.

### Bezugszeichenliste

- 10: Niederhubfahrzeug
- 12: Antrieb steil
- 14: Standplattform
- 16: Kurzdeichsel
- 17: Deichselkopf
- 18: Lastgabel
- 20: Antriebsrahmen
- 22: Lastrahmen
- 24: Last
- 26: Palette
- 28: Sensor
- 30: Schaltnocke

## Patentansprüche

1. Flurförderzeug (10), insbesondere Niederhubfahrzeug, mit einer Lastgabel (18), die zwischen einer Einfahrhöhe und einer Freihubhöhe über eine Hubeinrichtung verstellbar ist, eine Einfahr- und Freihubhöhe jeweils einstellbar und ein Bedienelement vorgesehen ist, bei dessen Betätigung die Hubeinrichtung die Lastgabel in die Freihubposition oder in die Einfahrhöhe verstellt, wobei die Lastgabel an einem höhenverstellbaren Lastrahmen (22) angeordnet ist, der an einem Antriebsrahmen (20) gelagert ist, wobei ein Sensor (28) die Relativbewegung zwischen diesen erfasst und mindestens eine Schaltnocke (30) zwischen Antriebs- und Lastrahmen angeordnet ist, bei deren Sensierung in einem Hubvorgang oder einem Senkvorgang ein erstes Signal zum Beenden des Hub- bzw. Senkvorgangs generiert wird und bei einer fehlenden Sensierung der mindestens einen Schaltnocke in einem Senkvorgang oder einem Hubvorgang ein zweites Signal zum Beenden des Hub- bzw. Senkvorgangs generiert wird.

2. Flurförderzeug nach Anspruch 1, **dadurch gekennzeichnet, dass** das Bedienelement bei seiner Betätigung die Hubeinrichtung für eine Bewegung zwischen Freihubhöhe und Einfahrhöhe ansteuert.

3. Flurförderzeug nach Anspruch 1 oder 2, **dadurch gekennzeichnet, dass** das Bedienelement ausgebildet ist, um durch ein einmaliges Berühren oder Drücken betätigt zu werden.

4. Flurförderzeug nach einem der Ansprüche 1 bis 3, **dadurch gekennzeichnet, dass** eine zeitliche Verzögerung für das erste oder zweite Signal einen Abstand zwischen Freihubhöhe und Einfahrhöhe vorgibt.

5. Flurförderzeug nach einem der Ansprüche 1 bis 4, **dadurch gekennzeichnet, dass** bei einem Hubvorgang bei Sensierung der mindestens einen Schaltnocke ein Signal zur Beendigung des Hubvorgangs generiert wird und durch einen vorbestimmen Nachlauf eine Freihubhöhe vorgegeben ist.

6. Flurförderzeug nach einem de Ansprüche 1 bis 5, **dadurch gekennzeichnet, dass** bei einem Senkvorgang bei fehlender Sensierung der mindestens einen Schaltnocke ein Signal zur Beendigung des Senkvorgangs generiert wird und durch einen vorbestimmten Nachlauf eine Einfahrhöhe vorgegeben ist.

7. Flurförderzeug nach einem der Ansprüche 1 bis 6, **dadurch gekennzeichnet, dass** für unterschiedliche Typen von Paletten Sätze von Freihub- und Einfahrhöhe vorbestimmt sind.

8. Flurförderzeug nach Anspruch 7, **dadurch gekennzeichnet, dass** der Typ von Palette von einer Bedienperson auswählbar ist.

9. Flurförderzeug nach Anspruch 7 oder 8, **dadurch gekennzeichnet, dass** der Typ von Palette automatisch erkannt und die entsprechend Freihub- und Einfahrhöhe ausgewählt wird.

10. Flurförderzeug nach einem der Ansprüche 1 bis 9, **dadurch gekennzeichnet, dass** ein Wahlschalter vorgesehen ist, mit dem das Bedienelement derart umgeschaltet werden kann, dass die Hubeinrichtung mindestens für die Dauer der Betätigung des Bedienelements die Lastgabel hebt oder senkt.

11. Flurförderzeug nach Anspruch 1 bis 10, **dadurch gekennzeichnet, dass** das Bedienelement einen Heben- und einen separaten Senken-Taster aufweist.

12. Flurförderzeug nach Anspruch 1 bis 11, **dadurch gekennzeichnet, dass** eine kurzzeitige Betätigung des Bedienelements genügt, um die Freihubhöhe oder die Einfahrhöhe anzufahren.

## Claims

1. An industrial truck (10), in particular low-platform truck, with a load fork (18) which is adjustable between an entry height and a free lift height via a lifting device, an entry- and free lift height each being adjustable and a control element being provided on the actuation of which the lifting device adjusts the load fork to the free lift height or to the entry height, wherein the load fork is arranged on a height-adjustable load frame (22) which is mounted on a drive frame (20), wherein a sensor (28) captures the relative movement between these, and at least one switch cam (30) is provided between the drive frame and the load frame, upon the sensing of which in a lifting procedure or a lowering procedure a first signal to end the lifting or lowering procedure is generated, and upon absent sensing of the at least one switch cam in a lowering procedure or a lifting procedure, a second signal to end the lifting or lowering procedure is generated.

2. The industrial truck according to claim 1, **characterised in that** the control element triggers the lifting device to a movement between free lift height and entry height when it is actuated.

3. An industrial truck according to claim 1 or 2, **characterised in that** the control element is configured to be actuated by only one touch or push at a time.

4. An industrial truck according to any one of claims 1 to 3, **characterised in that** a time delay for the first or second signal determines a distance between free lift height and entry height.

5. An industrial truck according to any one of claims 1 to 4, **characterised in that** a signal to end the lifting procedure is generated in a lifting procedure when the at least one switch cam is sensed, and a free lift height is given by a predetermined overrun.

6. An industrial truck according to any one of claims 1 to 5, **characterised in that** a signal to end the lowering procedure is generated in a lowering procedure when the at least one switch cam is not sensed, and an entry height is given by a predetermined overrun.

7. An industrial truck according to any one of claims 1 to 6, **characterised in that** sets of entry heights and free lift heights are predetermined for different types of palettes.

8. The industrial truck according to claim 7, **characterised in that** the type of the palette can be selected by an operator.

9. An industrial truck according to claim 7 or 8, **characterised in that** the type of the palette is recognised automatically and the corresponding free lift heights and entry heights are selected.

10. An industrial truck according to any one of claims 1 to 9, **characterised in that** a selector switch is provided by which the control element can be switched over such that the lifting device lifts or lowers the load fork at least for so long as the control element is actuated.

11. An industrial truck according to any one of claims 1 to 10, **characterised in that** the control element has a touch button for lifting and a separate touch button for lowering.

12. An industrial truck according to any one of claims 1 to 11, **characterised in that** an actuation of the control element for a short time is sufficient to arrive at the free lift height or the entry height.

## Revendications

1. Chariot de manutention (10), notamment transpalette, avec une fourche de chargement (18) qui est ajustable entre une hauteur de chargement et une hauteur de levée libre par un dispositif de levage, les hauteurs de chargement et de levée libre chacune étant réglables et un élément de commande étant prévu, par l'actionnement duquel le dispositif de levage règle la fourche de chargement à la hauteur de levée libre ou à la hauteur de chargement, la fourche de chargement étant arrangée sur un châssis porte-charge (22) réglable en hauteur qui est monté dans un châssis d'entraînement (20), un capteur (28) détectant le mouvement relatif entre ceux-ci et au moins une came de commutation (30) étant prévue entre le châssis d'entraînement et le châssis porte-charge, lorsque la détection de laquelle dans une opération de levage ou dans une opération d'abaissement un premier signal pour finir l'opération de levage ou d'abaissement est généré, et quand une détection de l'au moins une came de commutation n'a pas lieu dans une opération d'abaissement ou une opération de levage, un deuxième signal pour finir l'opération de levage ou d'abaissement est généré.

2. Chariot de manutention selon la revendication 1, **caractérisé en ce que** l'élément de commande commande le dispositif de levage à un mouvement entre la hauteur de levée libre et la hauteur de chargement lorsqu'il est actionné.

3. Chariot de manutention selon la revendication 1 ou 2, **caractérisé en ce que** l'élément de commande est configuré pour être actionné par un unique contact ou une unique pression.

4. Chariot de manutention selon l'une quelconque des revendications 1 à 3, **caractérisé en ce qu'**un temps de retard pour le premier ou le deuxième signal détermine une distance entre la hauteur de levée libre et la hauteur de chargement.

5. Chariot de manutention selon l'une quelconque des revendications 1 à 4, **caractérisé en ce qu'**un signal pour finir l'opération de levage est généré dans une opération de levage quand l'au moins une came de commutation est détectée, et une hauteur de levée libre est prédéterminée par une marche à vide prédéterminée.

6. Chariot de manutention selon l'une quelconque des revendications 1 à 5, **caractérisé en ce qu'**un signal pour finir l'opération d'abaissement est généré dans une opération d'abaissement quand l'au moins une came de commutation n'est pas détectée, et une hauteur de chargement est prédéterminée par une marche à vide prédéterminée.

7. Chariot de manutention selon l'une quelconque des revendications 1 à 6, **caractérisé en ce que** des sets de hauteurs de chargement et de hauteurs de levée libre sont prédéterminés pour des modèles de palette différents.

8. Chariot de manutention selon la revendication 7, **caractérisé en ce que** le modèle de la palette peut être sélectionné par un opérateur.

9. Chariot de manutention selon la revendication 7 ou 8, **caractérisé en ce que** le modèle de la palette est reconnu automatiquement et les hauteurs de levée libre et les hauteurs de chargement correspondantes sont sélectionnées.

10. Chariot de manutention selon l'une quelconque des revendications 1 à 9, **caractérisé en ce qu'**un sélecteur de mode est prévu par lequel l'élément de commande peut être commuté tellement que le dispositif de levage enlève ou abaisse la fourche de chargement au moins pour la durée de l'actionnement de l'élément de commande.

11. Chariot de manutention selon l'une quelconque des revendications 1 à 10, **caractérisé en ce que** l'élément de commande a un bouton poussoir de levage et un bouton poussoir d'abaissement séparés.

12. Chariot de manutention selon l'une quelconque des revendications 1 à 11, **caractérisé en ce qu'**un actionnement de l'élément de commande en peu de temps suffit pour arriver dans la hauteur de levée libre ou dans la hauteur de chargement.
